(19) Europäisches Patentamt
European Patent Office
Office européen des brevets

(11) Veröffentlichungsnummer: **0 442 062 B1**

(12) **EUROPÄISCHE PATENTSCHRIFT**

(45) Veröffentlichungstag der Patentschrift: **13.07.94**

(51) Int. Cl.$^5$: **C08F 8/12**, C08G 64/00

(21) Anmeldenummer: **90123174.6**

(22) Anmeldetag: **04.12.90**

(54) **Monofunktionelle Polyacrylate, ihre Herstellung und Verwendung zur Herstellung von Polycarbonaten.**

(30) Priorität: **16.12.89 DE 3941563**

(43) Veröffentlichungstag der Anmeldung:
**21.08.91 Patentblatt 91/34**

(45) Bekanntmachung des Hinweises auf die Patenterteilung:
**13.07.94 Patentblatt 94/28**

(84) Benannte Vertragsstaaten:
**DE FR GB IT**

(56) Entgegenhaltungen:
**EP-A- 0 217 178**
**FR-A- 2 564 846**
**US-A- 4 319 003**
**US-A- 4 351 924**
**US-A- 4 414 372**

(73) Patentinhaber: **BAYER AG**
**D-51368 Leverkusen(DE)**

(72) Erfinder: **Dujardin, Ralf, Dr.**
**Bodelschwinghstrasse 18**
**W-4150 Krefeld(DE)**
Erfinder: **Renner, Gerd, Dr.**
**Andreas-Gryphius-Strasse 22**
**W-5000 Köln 80(DE)**
Erfinder: **Piejko, Karl-Erwin, Dr.**
**Unterscheider Weg 7a**
**W-5060 Bergisch Gladbach 2(DE)**
Erfinder: **Boemer, Bruno, Dr.**
**Max-Planck-Strasse 53**
**W-5060 Bergisch Gladbach 2(DE)**
Erfinder: **Jung, Alfred, Dr.**
**Bodelschwinghstrasse 12**
**W-4150 Krefeld 1(DE)**
Erfinder: **Nouvertné, Werner, Dr.**
**Burgstrasse 17b**
**W-4150 Krefeld(DE)**

**EP 0 442 062 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Herstellung von monofunktionellen Polyacrylaten mit mittleren Zahlenmittelmolekulargewichten $\overline{M}_n$ von 3.000 bis 50.000, vorzugsweise von 5.000 bis 20.000, und mit einer Polydispersität D < 1,5, vorzugsweise < 1,2 der Formel (I)

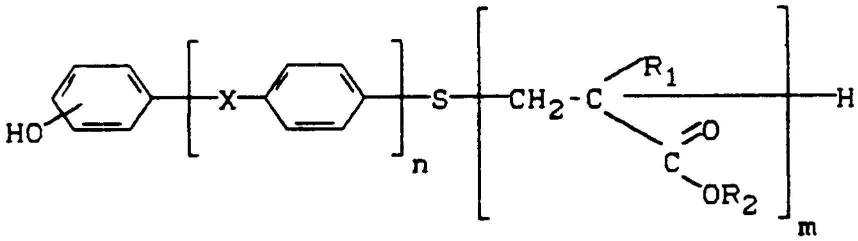
(I)

worin

X eine Einfachbindung, $C_1$-$C_8$-Alkylen, $C_2$-$C_{12}$-Alkyliden, Cyclohexyliden, -S-, -CO- oder -O- ist,
n Null oder 1 ist,
$R^1$ H, $CH_3$ oder CN ist,
$R^2$ $C_1$-$C_{12}$-Alkyl, $C_5$-$C_6$-Cycloalkyl, $C_7$-$C_{15}$-Aralkyl, $C_7$-$C_{15}$-Alkaryl, $C_6$-$C_{18}$-Aryl und $C_2$-$C_{12}$-ω-Alkoxyalkyl, wobei die Alkylreste auch teilweise oder vollständig fluoriert sein können, und
m eine ganze Zahl von 30 bis 500, vorzugsweise von 50 bis 200 und insbesondere von 75 bis 175,

das dadurch gekennzeichnet ist, daß man Mercaptosilane der Formel (II)

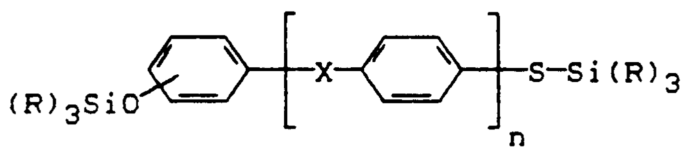
(II)

worin

X und n die für Formel (I) genannte Bedeutung haben und
R $C_1$-$C_{16}$-Alkyl, $C_5$-$C_6$-Cycloalkyl, $C_7$-$C_{15}$-Aralkyl, $C_7$-$C_{15}$-Alkaryl und $C_6$-$C_{18}$-Aryl, vorzugsweise $CH_3$ ist,

mit Verbindungen der Formel (III)

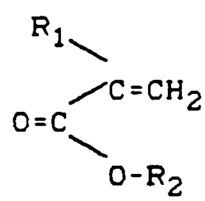
(III)

worin

$R_1$ und $R_2$ die für Formel (I) genannte Bedeutung haben,

in einer quasi-ionischen Polymerisation unter Verwendung von Katalysatoren bei Temperaturen von -50 bis 100 °C und bei einem molaren Verhältnis von (II) zu (III) wie 1 : 5 bis zu 1 : 1.000 und bei einem molaren Verhältnis van Katalysator zu Verbindung (II) von 1 : 500 bis 1 : 0,1 in aprotischen Lösungsmitteln umsetzt und nach beendeter Polymerisation mit Protonenspendern, wie beispielsweise $CH_3OH$ oder $CH_3COOH$, die "lebenden" Polymeren desaktiviert, danach die phenolische Siloxygruppe zum freien Phenol, beispielsweise mit methanolischer Salzsäure, hydrolysiert und durch Verdampfen der Lösungsmittel die phenolterminierten Polyacrylate in bekannter Weise isoliert.

Gegenstand der vorliegenden Erfindung sind außerdem die Verbindungen der Formel (I).

Die Ermittlung der Zahlenmittelmolekulargewichte $\overline{M}_n$ erfolgt durch Gelchromatographie nach vorheriger Eichung. Die $\overline{M}_w$ (Gewichtsmittelmolekulargewichte) wurden ebenfalls durch Gelpermeationschromatographie ermittelt.

Die Polydispersität D ist das Verhältnis aus Gewichtsmittelwert der Molmasse $\overline{M}_w$ und Zahlenmittelwert der Molmasse $\overline{M}_n$, also D = $\overline{M}_w/\overline{M}_n$.

Die Verbindungen der Formel (II) sind entweder im Handel erhältlich, also bekannt, oder nach bekannten Methoden durch Silylieren der entsprechenden Mercaptane zugänglich (siehe beispielsweise D. A. Evans, J. Am. Chem. Soc. 99, Seite 5009 (1977) und R. S. Glass, J. organomet. Chem. 61 (83) 1973).

Geeignete Mercaptosilane der Formel (II) sind bevorzugt 3- oder 4-(Trimethylsiloxy)-phenylmercapto-trimethylsilan.

Die Verbindungen der Formel (III) sind ebenfalls literaturbekannt oder nach literaturbekannten Verfahren erhältlich.

Bevorzugte Verbindungen (III) sind die (Meth)acrylsäureester in denen also $R_1$ H oder $CH_3$ ist und $R_2$ ein gegebenenfalls fluorierter $C_2$- bis $C_8$-Alkylrest ist.

Geeignete Katalysatoren sind Tris-(dimethyl-amino)-sulfoniumfluoro-trimethylsilicat (TASF), Tetrabutylammoniumfluorid (TBAF), Tris-(dimethylamino)-sulfoniumbifluorid ($TASHF_2$), Tetraalkylammoniumbifluoride, Kaliumbifluorid, Aluminiumalkylhalogenide und Zinkhalogenide. Ein besonders geeigneter Katalysator ist Zinkjodid.

Verfahren zur ionischen oder quasi-ionischen Polymerisation von polaren Monomeren mit einer in $\alpha$-Stellung zur polaren Gruppe befindlichen Doppelbindung sind bekannt (siehe z.B. die US-Patentschriften 4 351 924, 4 414 372 und 4 417 034). Gemäß diesen bekannten Verfahren wird die ionische Polymerisation mit Hilfe von Initiatoren und die quasi-ionischen polymerisationen mit Hilfe von Initiatoren in Gegenwart von nucleophilen oder elektrophilen Katalysatoren in Gang gesetzt.

In der DE-OS 3 504 168 (Le A 23 590) ist ein Verfahren zur quasi-anionischen Herstellung van Poly-(meth)acrylaten mit enger Molekulargewichtsverteilung unter Verwendung von Mercaptosilanen als Initiatoren beschrieben.

Demgegenüber lag es nicht nahe, die Verbindungen der Formel (II) einzusetzen, weil die phenolisch gebildete Sauerstoff-Siliciumbindung unter Reaktionsbedingungen nahezu gleich stabil wie die Schwefel-Siliciumbindung ist. Dadurch war für den Fachmann nicht vorhersehbar, daß Verbindungen der Formel (II) analog den in der DE-OS 3 504 168 beschriebenen Mercaptosilanen als Initiatoren für die quasi ionische Polymerisation einsetzbar sind und zu phenolischen Silyetherendgruppen bei den hergestellten Polyacrylaten führen.

Als geeignete aprotische Lösungsmittel für die quasi-ionische Polymerisation werden z.B. Acetonitril, Toluol oder Tetrahydrofuran bevorzugt.

Die erfindungsgemäßen monofunktionellen Polyacrylate eignen sich gut als Kettenabbrecher für die Herstellung aromatischer Polycarbonate, insbesondere nach dem Phasengrenzflächenverfahren, wobei übliche, andere Kettenabbrecher mitverwendet werden können.

Gegenstand der vorliegenden Erfindung ist somit auch die Verwendung der Polyacrylate der Formel (I) als monofunktionelle Kettenabbrecher, gegebenenfalls in Kombination mit üblichen anderen Kettenabbrechern zur Herstellung von aromatischen Polycarbonaten beziehungsweise Polycarbonatgemischen.

Gegenstand der vorliegenden Erfindung ist somit auch ein Verfahren zur Herstellung von aromatischen Polycarbonaten beziehungsweise Polycarbonatgemischen nach dem bekannten Verfahren der Phasengrenzflächenpolykondensation aus Diphenolen, Phosgen und Kettenabbrechern in einem Gemisch aus wäßrig-alkalischer Phase und organischer Phase unter Mitverwendung von Katalysatoren, das dadurch gekennzeichnet ist, daß als Kettenabbrecher solche der Formel (I) in Mengen von 0,1 Mol-% bis 10 Mol-%, bezogen auf Mole Diphenole, eingesetzt werden, wobei jeweils maximal 99 Mol-% der Molmengen an einzusetzendem Kettenabbrecher (I) durch übliche andere Kettenabbrecher ersetzt sein können.

Oder anders ausgedrückt, von den jeweils einzusetzenden Molmengen an Kettenabbrechern, welche bezogen auf Mole Diphenole, zwischen 0,1 Mol-% und 10 Mol-%, vorzugsweise zwischen 3 Mol-% und 5 Mol-%, betragen, sollen die Kettenabbrecher der Formel (I) 100 Mol-% bis 1 Mol-%, vorzugsweise 100 Mol-% bis 50 Mol-% und insbesondere 100 Mol-% bis 75 Mol-% betragen und die üblichen anderen Kettenabbrecher 0 Mol-% bis 99 Mol-%, vorzugsweise 0 Mol-% bis 50 Mol-% und insbesondere 0 Mol-% bis 25 Mol-%, betragen.

Gegenstand der vorliegenden Erfindung sind außerdem die nach dem erfindungsgemäßen Verfahren erhältlichen Polycarbonate beziehungsweise Polycarbonatgemische.

Die Molekulargewichte der erfindungsgemäß erhältlichen Polycarbonate ohne die angeknüpften Kettenabbrecher sollen ausgedrückt als $\overline{M}_n$ (Zahlenmittelmolekulargewicht, ermittelt durch Gelchromatographie nach vorheriger Eichung) von 2.000 g/Mol bis 200.000 g/Mol, vorzugsweise von 5.000 g/Mol bis 150.000 g/Mol und insbesondere von 7.500 g/Mol bis 100.000 g/Mol betragen.

Die Gewichtsmittelmolekulargewichte der erfindungsgemäß erhältlichen Polycarbonate ohne die angeknüpften Kettenabbrecher ($\overline{M}_w$ ebenfalls durch Gelpermeationschromatographie ermittelt) sollen 4.000 bis 400.000, vorzugsweise 10.000 bis 300.000 und insbesondere 15.000 bis 200.000 betragen.

Die Molekulargewichte der erfindungsgemäß erhältlichen Polycarbonate beziehungsweise Polycarbonatgemische einschließlich der angeknüpften Kettenabbrecher hängen verständlicherweise von der Wahl des Kettenabbrechers selbst mit ab, welcher ja selbst im Falle der üblichen anderen Kettenabbrecher ein $\overline{M}_n$ von 94 (für Phenol) bis etwa 300 bis 400 (je nach Art der substituierten Phenole oder Carbonsäurechloride) aufweisen und im Falle der Kettenabbrecher der Formel (I) erfindungsgemäß ein $\overline{M}_n$ von 3.000 bis 50.000 haben.

Somit läßt sich nur ein Bereich für den mittleren Polymerisationsgrad der erfindungsgemäß erhältlichen Polycarbonate beziehungsweise Polycarbonatgemische angeben, welcher sich jeweils nach der Gesamtmolmenge Kettenabbrecher richtet und unabhängig von der Art des jeweils eingesetzten Kettenabbrechers ist.

Die Polymerisationsgrade "p" der erfindungsgemäß erhältlichen Polycarbonate beziehungsweise Polycarbonatgemische liegen zwischen 10 und 1.000, vorzugsweise zwischen 30 und 80.

Die erfindungsgemäß erhältlichen Polycarbonate beziehungsweise Polycarbonatgemische sind je nach Molekulargewicht des aromatischen Mittelteils und der angeknüpften Kettenabbrecher thermoplastisch verarbeitbare Elastomere oder zähe Thermoplaste.

Geeignete Katalysatoren für die Synthese der erfindungsgemäßen Polycarbonat(gemisch)e sind beispielsweise tertiäre Amine wie Triethylamin oder N-Ethylpiperidin.

Die wäßrig alkalische Phase besteht beispielsweise aus wäßriger Natronlauge oder wäßriger Kalilauge.

Die organische Phase besteht beispielsweise aus $CH_2Cl_2$ und/oder Chlorbenzol.

Die Isolierung der erfindungsgemäß erhältlichen Polycarbonate beziehungsweise Polycarbonatgemische erfolgt dadurch, daß man die verfahrensgemäß erhältliche Zweiphasenemulsion spaltet, die Phasen abtrennt und nach Waschen mit Säure (wie z.B. Phosphorsäure) die getrocknete, organische Phase über bekannte Ausdampfextruder fährt und den erhaltenen Strang granuliert. Im Falle der thermoplastisch verarbeitbaren Elastomere kann auch eine Aufarbeitung durch Fällung in unpolaren Lösungsmitteln, wie z.B. Hexan, Heptan erfolgen.

Geeignete Diphenole für die Herstellung der erfindungsgemäßen Polycarbonate beziehungsweise Polycarbonatgemische sind insbesondere solche der Formel (IV)

$$HO{-}Z{-}OH \qquad (IV),$$

in denen Z ein aromatischer Rest mit 6 bis 30 C-Atomen ist, der einen oder mehrere aromatische Kerne enthalten kann, substituiert sein kann und aliphatische Reste, cycloaliphatische Reste, araliphatische Reste, -S-, $-SO_2-$, -CO- oder -O- als Brückenglieder enthalten kann.

Beispiele für Diphenole der Formel (IV) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole
sowie deren kernalkylierte und kernhalogenierte Verbindungen.

Diese und weitere geeignete Diphenole (IV) sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956 und 3 832 396, in der französischen Patentschrift 1 561 518 und in der Monographie "H. Schnell, Chemistry and Physics of Polycarbonates, Interscience Publishers, New York 1964", beschrieben.

Bevorzugte Diphenole (IV) sind beispielsweise:
4,4'-Dihydroxydiphenyl,
2,2-Bis-(4-hydroxyphenyl)-propan,

2,4-Bis-(4-hydroxyphenyl)-2-methylbutan,
1,1-Bis-(4-hydroxyphenyl)-cyclohexan,
1,1-Bis-(4-hydroxyphenyl-3,3,5-trimethylcyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (IV) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan
1,1-Bis-(4-hydroxyphenyl)-cyclohexan und
1,1-Bis-(4-hydroxyphenyl)-3,3,5-trimethylcyclohexan.

Die Diphenole können sowohl einzeln als auch im Gemisch eingesetzt werden.

Als übliche andere, d.h. für die Polycarbonatsynthese bekannte Kettenabbrecher sind insbesondere niedermolekulare also andere phenolische Verbindungen als die der Formel (I), wie beispielsweise Phenol selbst, oder Alkylphenole, wie beispielsweise tert.-Butylphenol oder andere $C_1$-$C_7$-Alkyl-substituierte Phenole und insbesondere solche der Formel (V)

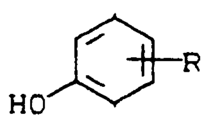

(V)

worin R einen verzweigten $C_8$- und/oder $C_9$-Alkylrest darstellt. Bevorzugt ist hierbei im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %.

Geeignete übliche Kettenabbrecher sind auch Halogenphenole wie p-Chlorphenol und 2,4,6-Tribromphenol. Diese Kettenabbrecher sind literaturbekannt.

Die erfindungsgemäß erhältlichen Polycarbonate beziehungsweise Polycarbonatgemische, bei deren Herstellung die bevorzugte Menge an Kettenabbrechern (I) von 100 % bis 50 %, insbesondere von 100 % bis 75 %, bezogen auf die eingesetzten Gesamtmol-% an Kettenabbrecher, eingesetzt ist, entsprechen somit vorzugsweise der Formel (VI)

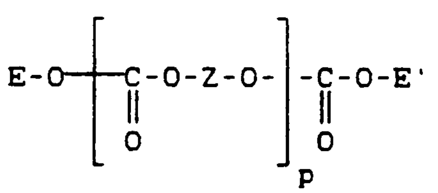

(VI) ,

worin

| | |
|---|---|
| -Z- | die für Formel (IV) genannte Bedeutung hat, |
| p | eine ganze Zahl zwischen 10 und 1.000, vorzugsweise zwischen 30 und 80 ist, |
| E-O- | den Rest der Formel (Ia) |

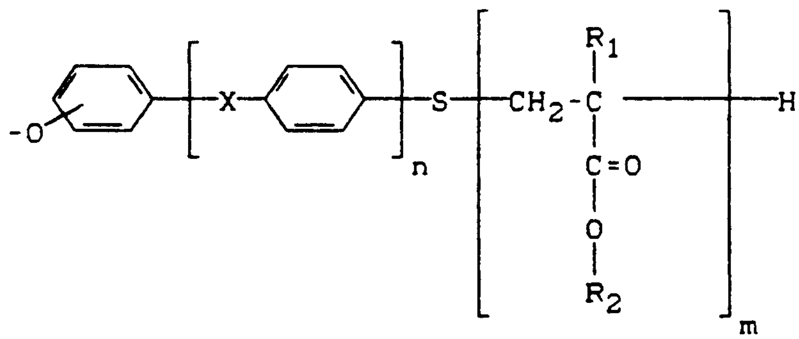 (Ia) ,

worin X, m, m, $R_1$ und $R_2$ die für Formel (I) genannte Bedeutung haben, darstellt, und worin E'-O entweder E-O- oder der Rest der besagten üblichen anderen Kettenabbrecher ist, also insbesondere niedermolekulare andere Phenoxy-Reste als (Ia) darstellt, wobei insbesondere E'-O mindestens zur Hälfte dem Rest E-O entspricht, nämlich dann, wenn (I) in Mengen von 100 % bis 75 %, bezogen auf die Gesamtmol-% an eingesetztem Kettenabbrecher, eingesetzt ist.

Stand der Technik

Aus der DE-OS 1 595 777 sind Polymere mit am Rückgrat befindlichen Seitenresten und darauf aufgepfropften Polycarbonatketten beschrieben.

In unserem Einspruch gegen die entsprechende DE-AS 1 595 777 haben wir ausgeführt, daß die Pfropfgrundlagen im Mittel zwar auch eine Funktionalität von kleiner 1, also monofunktionelle sein können, die Patentabteilung des deutschen Patentamts hat jedoch in ihrem Beschluß vom 20.2.83 das Vorliegen von linearen Copolymeren gemäß DE-AS 1 595 777 eindeutig ausgeschlossen.

Die Polymeren gemäß US-PS 3 687 895 bzw. gemäß DE-AS 1 770 144 oder DE-OS 1 770 144 betreffen auf phenolisches OH-gepfropfte Polycarbonatketten, wobei hierbei mindestens 5 OH-Gruppen pro Molekül vorliegen müssen.

Entsprechende Pfropfpolycarbonate mit 3 bis 10 Seitenketten sind aus der DE-OS 2 357 192 bekannt.

Die radikalische Polymerisation von Vinylmonomeren in Gegenwart von thermoplastischen Polycarbonaten ist ebenfalls bekannt (siehe beispielsweise US-Patent 3 462 515). Falls Pfropfreakionen dabei stattfinden, ist keine gezielte Stelle in der Polycarbonatkette definiert; außerdem sind die Molekulargewichte der aufpolymerisierten Vinylpolymeren im allgemeinen höher, als bei anionisch polymerisierten Vinylpolymerisaten.

In Chem. Abstracts Band 81, Nr. 4, 29. Juli 1974, Ref. N. 13 988a betreffend die japanische Patentanmeldung Nr. 70 121 553 wird die Reaktion von Allylendgruppenhaltigen Polycarbonaten mit Vinylverbindungen beschrieben. Die erhaltenen Produkte sind transparent und löslich.

Gemäß DE-OS 2 702 626 werden COOH-haltige Polymerisate, die 1 bis 5 COOH-Gruppen enthalten, in die Polycarbonatsynthese einbezogen.

Gemäß EP-PS 9747 sind verzweigte hochmolekulare, thermoplastische Verbindungen, die aus Polycarbonat-Segmenten und aus Polymersegmenten aufgebaut sind, wobei diese dadurch hergestellt werden, daß man Polycarbonate mit mindestens einer ungesättigten Endgruppe pro Molekül in Gegenwart eines radikalisch polymerisierbaren Monomeren polymerisiert.

Aus der DE-OS 3 618 378 sind Polyolefin-carbonsäuren und ihre Verwendung zur Herstellung von Polyolefin-Polycarbonat-Blockcopolymeren bekannt.

Aus JA 63/15 821 (nur als Referat vorliegend) sind Oligcarbonate mit ungesättigten Endgruppen bekannt.

Aus JA 63/15 822 (nur als Referat vorliegend) sind Polycarbonat-Block-Copolymere bekannt, indem Vinyl- und Polycarbonatharze in Gegenwart von Isopropenylphenolen hergestellt werden, und indem Vinylverbindungen auf Polycarbonatharze anpolymerisiert werden.

Aus der DE-OS 2 612 230 sind verzweigte Segmentpolymere bekannt.

Aus JA 58/101 112 (nur als Referat vorliegend) sind Copolymere auf Basis von Polycarbonaten mit speziellen Endgruppen und Polymerisaten bekannt.

Aus JA 55/133 405 (nur als Referat vorliegend) sind leicht verarbeitbare Polycarbonatharze bekannt, die durch Polymerisation von ungesättigten Monomeren in wäßriger Dispersion in Gegenwart von Fließmittelhaltigem Polycarbonatgranulat erhalten werden.

Aus JA 59/27 908 (nur als Referat vorliegend) sind Polycarbonatblockcopolymere bekannt, die aus Polycarbonaten und polymerisierbaren Monomeren erhalten werden, wobei die Polycarbonate Radikalbildende Gruppen enthalten.

In der japanischen Offenlegungsschrift Nr. 61/051015 (nur als Referat vorliegend) werden Polycarbonat-Blockcopolymere erhalten durch Bestrahlung von Benzoinstrukturen enthaltenden Polycarbonaten in Gegenwart von ungesättigten Monomeren.

Aus der US-Patentschrift 4 319 003 sind bereits Blockcopolymere bekannt, die die Struktur Polymethylmethacrylat-Polycarbonat-Polymethylmethacrylat haben, wobei die Polymethacrylat-Blöcke ein $\overline{M}_n$ -(Zahlenmittel) von 500 bis 35.000 haben und der Polycarbonatblock ein $\overline{M}_n$ (Zahlenmittel) von 500 bis 30.000 haben und die Blockcopolymere ein $\overline{M}_n$ (Zahlenmittel) von 15.000 bis 100.000 haben.

Die Herstellung dieser Blockcopolymeren erfolgt jedoch in anderer Weise, indem die monofunktionellen Polymethylmethacrylate durch radikalische Polymerisation hergestellt werden, in Monochlorformiate übergeführt werden und dann mit vorgefertigten Polycarbonat-Diphenolen im Verhältnis 2 : 1 umgesetzt werden.

Nachteile sind eine breite Molekulargewichtsverteilung der ohne Kettenabbrecher hergestellten Polycarbonat-Diphenole, eine breite Molekulargewichtsverteilung der radikalisch hergestellten Polymethylmethacrylate und das Vorliegen von nicht eingebauten Polymethylmethacrylatsegmenten im Blockcopolymer, bedingt durch die allgemein bekannten Nebenreaktionen bei radikalischen Polymerisationen oder der geringen Reaktivität von aliphatischen OH-Gruppen bei der Überführung in die Monochlorformiate (siehe dazu Schnell, Chemistry and Physics of Polycarbonates, Interscience Publishers, 1964, Seite 57, Absätze 2 und 3).

Die nach dem erfindungsgemäßen Verfahren erhältlichen Polycarbonate beziehungsweise Polycarbonatgemische sind entweder selbst benzinbeständig, und zwar dann, wenn überwiegend übliche andere Kettenabbrecher eingesetzt wurden, oder bewirken, wenn überwiegend Kettenabbrecher (I) eingesetzt wurden, als Zusätze zu anderen thermoplastischen, aromatischen Polycarbonaten eine Verbesserung der Benzinbeständigkeit derselben.

Im letzteren Fall kann man somit durch das Abmischen mit anderen, separat hergestellten Polycarbonaten auch zusätzlich durch die Wahl eines anderen Molekulargewichts oder, besser, eines anderen Polymerisationsgrads des separat hergestellten Polycarbonats die benzinbeständigen Polycarbonatformmassen zusätzlich variieren.

Gegenstand der vorliegenden Erfindung ist somit auch die Verwendung der erfindungsgemäß erhältlichen Polycarbonate beziehungsweise Polycarbonatgemische der Formel (VI) [Komponente B)] in Mengen von 0,5 Gew.-% bis 30 Gew.-%, vorzugsweise in Mengen von 1 Gew.-% bis 12 Gew.-% und insbesondere in Mengen von 2 Gew.-% bis 9 Gew.-%, bezogen auf Gesamtgewicht an Komponente B) und anderem thermoplastischen, aromatischen Polycarbonat [Komponente A)], zur Verbesserung der Benzinbeständigkeit von anderen thermoplastischen, aromatischen Polycarbonaten [Komponente A)].

Gegenstand der vorliegenden Erfindung sind somit auch Polycarbonatformmassen, enthaltend von 0,5 Gew.-% bis 30 Gew.-%, vorzugsweise von 1 Gew.-% bis 12 Gew.-% und insbesondere von 2 Gew.-% bis 9 Gew.-%, bezogen auf Gesamtgewicht an Polycarbonatformmasse, an den erfindungsgemäß erhältlichen Polycarbonaten beziehungsweise Polycarbonatgemischen der Formel (VI) gamäß Komponente B) und von 99,5 Gew.-% bis 70 Gew.-%, vorzugsweise von 99 Gew.-% bis 88 Gew.-% und insbesondere von 98 Gew.-% bis 91 Gew.-% an anderen thermoplastischen Polycarbonaten [Komponente A)], wobei die Summe der Komponenten A) + B) jeweils 100 Gew.-% ist.

Eine derartige Verwendung zur Verbesserung der Benzinbeständigkeit ist im US-Patent 4 319 003 weder angesprochen noch nahegelegt. Die Verbesserung der Benzinbeständigkeit von thermoplastischen Polycarbonaten kann vielmehr auf verschiedene Weise erfolgen (siehe beispielsweise DE-OS 31 20 594, EP-PS 00 77 415, DE-OS 33 02 124, EP-OS 01 31 196, DE-OS 33 47 071, DE-OS 36 28 258, DE-OS 37 12 116 sowie dort zitierten Stand der Technik und außerdem EP-PS 01 19 533, EP-OS 01 73 358 und EP-OS 01 86 825).

Die benzinbeständigen Polycarbonatformmassen gemäß vorliegender Erfindung werden jedoch durch diesen bisher bekannten Stand der Technik weder vorbeschrieben noch nahegelegt.

Andere thermoplastische, aromatische Polycarbonate gemäß Komponente A) im Sinne der vorliegenden Erfindung sind solche Polycarbonate, die keine Endgruppen der Formel (Ia) enthalten.

Die anderen thermoplastischen, aromatischen Polycarbonate gemäß Komponente A), die erfindungsgemäß in ihrer Benzinbeständigkeit verbessert werden sollen, sind solche auf Basis von Diphenolen der Formel (VII)

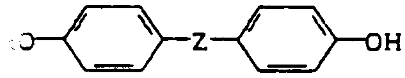

(VII),

worin

Z eine Einfachbindung, ein Alkylenrest mit 1 bis 8 C-Atomen, ein Alkylidenrest mit 2 bis 12 C-Atomen, ein Cyclohexylidenrest, ein 3,3,5-Trimethylcyclohexylidenrest gamäß deutscher Patentanmeldung DE-A-3 832 396, ein Benzylidenrest, ein Methylbenzylidenrest, ein Bis-(phenyl)-methylenrest, -S-, $-SO_2-$, -CO- oder -O- ist,

und mit $\overline{M}_w$ (Gewichtmittelmolekulargewichten, ermittelt in bekannter Weise über die relative Lösungsviskosität) zwischen 15.000 und 120.000, vorzugsweise zwischen 20.000 und 80.000 und insbesondere zwischen 25.000 und 45.000.

Geeignete Diphenole (VII) sind bereits unter den Diphenolen (IV) aufgezählt; dies gilt auch für die bevorzugten und die besonders bevorzugten Diphenole (VII).

Bevorzugte Diphenole der Formel (VII) sind aber auch solche, in denen -Z- einen polymeren Siloxyrest enthält und die der Formel (VIIa) entsprechen,

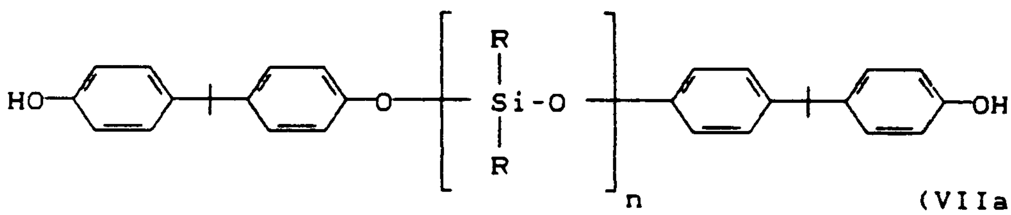

(VIIa)

worin

R = $C_1$-$C_4$-Alkyl, vorzugsweise $CH_3$-, und

n = 20 bis 100, vorzugsweise 40 bis 80 sind.

Geeignete Diphenole der Formel (VIIa) sind beispielsweise solche der Formel (VIIb)

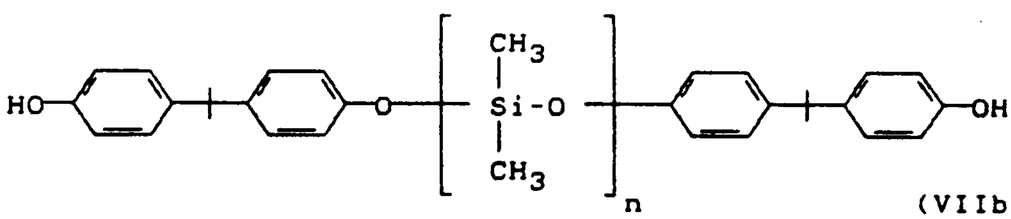

(VIIb)

worin

n = 40, 60 oder 80 ist.

Die Polycarbonate gemäß Komponente A) sind sowohl Homopolycarbonate als auch Copolycarbonate, wobei die Diphenole (VIIa) beziehungsweise (VIIb) maximal in Mengen von 20 Gew.-%, bezogen auf die Molsumme aller einzusetzenden Diphenole (VII) + (VIIa) beziehungsweise (VIIb) in die Polycarbonate einkondensiert werden.

Die Polycarbonate gemäß Komponente A) können linear, aber auch verzweigt sein.

Als Verzweiger dienen, falls benutzt, in bekannter Weise geringe Mengen, vorzugsweise Mengen zwischen 0,05 und 2,0 Mol-% (bezogen auf Mole eingesetzte Diphenole), an drei oder mehr als dreifunktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind Phloroglucin,

4,6-Dimethyl-2,4-6-tri-(4-hydroxyphenyl)-hepten-2,

4,6-Dimethyl-2,4,6-tri-(4-hydroxyphenyl)-heptan,

1,3,5-Tri-(4-hydroxyphenyl)-benzol,

1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthal-säureester,
Tetra-(4-hydroxyphenyl)-methan,
Tetra-(4-(4-hydroxyphenyl-isopropyl)-phenoxy)-methan
und
1,4-Bis-(4'-,4''-dihydroxytriphenyl)-methyl)-benzol.

Einige der sonstigen dreifunktionellen Verbindungen sind 2,4-Bihydroxybenzoesäure, Trimesinsäure, Cyanurchlorid und 3,3-Bis-(3-methyl-4-hydroxyphenyl)-2-oxo-2,3-dihydroindol.

Geeignete Kettenabbrecher für die Regulierung der Molekulargewichte der Polycarbonate der Komponente A) sind die für die Polycarbonatsynthese üblichen, insbesondere die niedermolekularen, also anderen phenolischen Verbindungen als die der Formel (I), wie sie für die Herstellung der erfindungsgemäßen Polycarbonate der Komponente B) bereits beschrieben wurden.

Die Polycarbonate gemäß Komponente A) sind entweder literaturbekannt oder Gegenstand der deutschen Patentanmeldungen DE-A-3 832 396 und 3 842 931 oder nach bekannten Verfahren herstellbar.

Die Polycarbonate gemäß Komponente A) können sowohl allein als auch im Gemisch eingesetzt werden.

Zur Herstellung der erfindungsgemäßen Polycarbonatformmassen aus den erfindungsgemäß erhältlichen Polycarbonaten beziehungsweise Polycarbonatgemischen der Formel (VI) gemäß Komponente B) und den anderen Polycarbonaten gemäß Komponente A) können die Mischungspartner im jeweils gewünschten Mischungsverhältnis oberhalb der Erweichungstemperatur der als Komponente A) dienenden anderen thermoplastischen, aromatischen Polycarbonate vermischt werden.

Dies kann beispielsweise durch Compoundierung bei der Extrusion in den üblichen Schneckenmaschinen in einem einzigen Arbeitsgang erfolgen und zwar beispielsweise bei Temperaturen zwischen 280 und 350 °C. Zur Compoundierung eignen sich bekannte Apparaturen. Doppelschneckenextruder werden bevorzugt eingesetzt.

Weiterhin kann die Herstellung der erfindungsgemäßen Polycarbonatformmassen auch durch Mischen von Lösungen der Polycarbonate gemäß Komponente B) mit Lösungen der Polycarbonate gemäß Komponente A) erfolgen, woran sich das gemeinsame Ausdampfen der Lösungsmittel, beispielsweise über einen Extruder, und anschließende Granulierung oder sonstige Isolierung anschließt.

Gegenstand der vorliegenden Erfindung ist somit außerdem ein Verfahren zur Herstellung der erfindungsgemäßen Polycarbonatformmassen, enthaltend als Komponente

A) 70 Gew.-% bis 99,5 Gew.-%, vorzugsweise 88 Gew.-% bis 99 Gew.-% und insbesondere 91 Gew.-% bis 98 Gew.-% an den in Rede stehenden anderen, thermoplastischen, aromatischen Polycarbonaten und als Komponente

B) 30 Gew.-% bis 0,5 Gew.-%, vorzugsweise 12 Gew.-% bis 1 Gew.-% und insbesondere 9 Gew.-% bis 2 Gew.-% an den erfindungsgemäß erhältlichen Polycarbonaten, beziehungsweise Polycarbonatgemischen der Formel (VI),

wobei die Gewichtssumme aus A) + B) jeweils 100 Gew.-% ist, das dadurch gekennzeichnet ist, daß man entweder die Komponenten A) mit B) oberhalb der Erweichungstemperatur der Komponente A) vermischt und anschließend dieses Gemisch in bekannter Weise isoliert oder Lösungen der Komponente A) mit Lösungen der Komponente B) vermischt und anschließend die Mischung durch gemeinsames Ausdampfen der Lösungsmittel in bekannter Weise isoliert.

Ein geeignetes Lösungsmittel für die Polycarbonatkomponente A) ist beispielsweise $CH_2Cl_2$, für die Komponente B) beispielsweise Methylenchlorid oder Chlorbenzol.

Es ist selbstverständlich, daß im Bedarfsfall bei derartigen Polymermischungen die für Polycarbonat bzw. Poly(meth)acrylate üblichen Stabilisatorsysteme und/oder Entformungsmittel verwendet werden können, die durch Compoundierung, wie oben beschrieben, in bekannter Weise eingearbeitet werden können.

Zur Bestimmung der Benzinbeständigkeit wurden Prüfkörper mit den Maßen 80 mm x 10 mm x 4 mm hergestellt, die auf Biegeschablonen verschiedener Krümmungsradien so eingespannt wurden, daß Randfaserdehnungen $\epsilon_R$ von 0,3 % bzw. 1,0 % resultieren. Die Schablonen wurden mit aufgebrachter Probe 15 Min. bei 70 °C in einem Wärmeschrank (mit Luftdurchwirbelung nach DIN 50 011, 2, 3) gelagert.

Die Schablonen mit den Proben wurden aus dem Schrank entnommen und unmittelbar danach ein Prüfkraftstoffgetränkter Wattebausch aufgelegt. Als Prüfkraftstoff wurde ein Testbenzin nach DIN 51 604

verwendet, das sich aus 50 Vol-% Toluol, 30 Vol-% Isooctan, 15 Vol-% Diisobutylen und 5 Vol-% Ethanol zusammensetzt. Nach 15 Min. Einwirkdauer wurde der Wattebausch entfernt und weitere 15 Min. abgewartet, um die Probe ablüften zu lassen.

Anschließend wurden die Prüfkörper mit dem unbewaffneten Auge wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch |

Die Bestimmung der verbesserten Schlagzähigkeit erfolgte ebenfalls an Prüfkörpern mit den Maßen 80 mm x 10 mm x 4mm. Die Kerbschlagzähigkeit ($a_k$) wurde nach Izod entsprechend ISO 180/1A durchgeführt. Die Ergebnisse der anwendungstechnischen Prüfungen sind in der folgenden Tabelle zusammengestellt, als Vergleich wurde ein Bisphenol-A-Polycarbonat mit p-tert.-Butylphenoxy-Endgruppen mit $\eta_{rel}$ = 1.290 = einem p von 55,5 mitgeprüft (Beispiel 6).

## Beispiele

### Beispiel 1

a) Herstellung einer Verbindung der Formel (I), worin n = O, $R_1$ = H und $R_2$ = $C_4H_9$ ist.

In einem ausgeheizten 12 l Autoklaven mit Blattrührer werden 3,5 l trockenes Toluol unter Stickstoff vorgelegt. Hierzu werden 1,5 kg über Calciumhydrid destilliertes Butylacrylat und 19,5 g getrocknetes Zinkiodid zugesetzt, dreimal mit Stickstoff gespült und auf 0 °C gekühlt. Danach werden 90 g Bis-trimethylsilyl-monothiohydrochinon zugegeben und das Reaktionsgemisch 20 Stunden bei 0 °C nachgerührt, um es dann mit 150 ml Methanol abzustoppen.

Die Lösung wird anschließend über eine $Al_2O_3$ gefüllte Säule gegeben und die Silylgruppen nach Zugabe von 15 ml konz. Salzsäure und 150 ml Methanol in 3 Stunden bei 80 °C abgespalten.

Die Ausbeute beträgt nach dem Einrotieren etwa 1.300 g.

Das mittlere Molekulargewicht, ermittelt durch Gelpermeationschromatographie, wurde zu $\overline{M}_n$ = 14.100 (≙ m = 110) g/Mol die Polydispersität zu D = 1.09 bestimmt.

b) Polycarbonat mit Endgruppen der Formel (Ia)

Innerhalb von 15 Min. werden bei 20 bis 25 °C unter Rühren 15 g (0,15 Mol) Phosgen in ein Gemisch aus 22,8 g (0,10 Mol) 2,2-Bis(4-hydroxyphenyl)-propan (BPA), 20 g Natronlauge (0,50 Mol), 400 ml Wasser und 42,3 g (= 3 Mol-% bezogen auf BPA) des unter a) beschriebenen Polybutylacrylats gelöst in 600 ml Methylenchlorid eingeleitet. Anschließend werden 0,14 ml (= 1 Mol-% bezogen auf BPA) N-Ethylpiperidin zugesetzt und 1 h lang nachgerührt. Die organische Phase wird abgetrennt, elektrolytfrei gewaschen und nach Abdestillieren des Methylenchlorids bei 80 °C getrocknet. Es wurden 65 g Produkt erhalten, mit einer rel. Lösungsviskosität $\eta_{rel}$ = 1,248.

Das Molekulargewicht des aromatischen Polycarbonatblocks beträgt $\overline{M}_n$ = 16.600 g/Mol (ermittelt durch Gelpermeationschromatographie) was einem Polykondensationsgrad p von 65,3 entspricht. Das Gesamtmolekulargewicht des Blockcopolymeren einschließlich der Endgruppen beträgt $\overline{M}_n$ = 44.800 g/Mol.

### Beispiel 2

Polycarbonat mit Endgruppen der Formel (Ia)

Innerhalb von einer Stunde werden bei 20 bis 25 °C unter Rühren 15 g (0,15 Mol) Phosgen in ein Gemisch aus 22,8 g (0,10 Mol) 2,2-Bis-(4-hydroxyphenyl)-propan (BPA), 20 g Natronlauge (0,5 Mol), 400 ml Wasser und 14,1 g (= 1 Mol-%, bezogen auf BPA) des in Beispiel 1 a) beschriebenen Polybutylacrylats

gelöst in 600 ml Methylenchlorid eingeleitet. Anschließend werden 0,14 ml (= 1 Mol-%, bezogen auf BPA) N-Ethylpiperidin zugesetzt und 1 h lang nachgerührt. Die organische Phase wird abgetrennt, elektrolytfrei gewaschen und das Blockcopolymer nach Abdestillieren des Methylenchlorids bei 80 °C getrocknet. Es wurden 37 g Produkt erhalten, mit einer rel. Lösungsviskosität $\eta_{rel}$ = 1,464.

Das Molekulargewicht des aromatischen Polycarbonatblocks beträgt $\overline{M}_n$ = 22.600 g/Mol, was einem Polykondensationsgrad p von 89 entspricht. Das Gesamtmolekulargewicht des Blockcopolymeren einschließlich der Endgruppen beträgt 50.800 g/Mol.

Beispiel 3

Polycarbonat mit Endgruppen der Formel (Ia) und 4-tert.-Butylphenoxy-Endgruppe.

Innerhalb von einer Stunde werden bei 20 bis 25 °C unter Rühren 15 g (0,15 Mol) Phosgen in ein Gemisch aus 22,8 g (0,10 Mol) 2,2-Bis-(4-hydroxyphenyl)-propan (BPA), 20 g Natronlauge (0,5 Mol); 400 ml Wasser, 0,225 g (= 1,5 Mol-%, bezogen auf BPA) 4-tert.-Butylphenol und 21,65 g (= 1,5 Mol-%, bezogen auf BPA) des in Beispiel 1 a) beschriebenen Polybutylacrylats gelöst in 600 ml Methylenchlorid eingeleitet. Anschließend werden 0,14 ml (= 1 Mol-%, bezogen auf BPA) N-Ethylpiperidin zugesetzt und eine Stunde lang nachgerührt. Die organische Phase wird abgetrennt, elektrolytfrei gewaschen und das Blockcopolymer nach Abdestillieren des Methylenchlorids bei 80 °C getrocknet. Es wurden 42 g Produkt erhalten, mit einer rel. Lösungsviskosität $\eta_{rel}$ = 1.258.

Das Molekulargewicht des aromatischen Polycarbonatblocks beträgt $\overline{M}_n$ = 14.200 g/Mol, was einem Polykondensationsgrad p von 56 entspricht. Das Gesamtmolekulargewicht des Blockcopolymeren einschließlich der Endgruppen beträgt 28.300 g/Mol.

Beispiel 4 (Abmischen durch Schmelzcompoundierung)

Gemischt wurden 93,4 Teile eines Polycarbonats (PC) aus Bisphenol A mit einer rel. Lösungsviskosität $\eta_{rel}$ = 1,290 (gemessen in Methylenchlorid bei 5 g/l bei 25 °C) und 6,6 Teile des Blockcopolymeren (entspricht 4 Teilen Butylacrylatblock) des Beispiels 1 b) durch Compoundierung in einer ZSK 32 bei 270 bis 290 °C.

Beispiel 5 (In situ Blendherstellung)

Innerhalb von einer Stunde werden bei 20 bis 25 °C unter Rühren 2,7 kg (27 Mol) Phosgen in ein Gemisch aus 4,56 kg (20 Mol) 2,2-Bis-(4-hydroxyphenyl)-propan (BPA), 99,8 g (= 3,4 Mol-% bezogen auf BPA) p-tert.-Butylphenol, 8 kg Natronlauge (w = 45 %), 40 l Wasser, 12 kg Chlorbenzol und 250 g (= 4 Gew.-%, bezogen auf die Gesamtmenge des hergestellten Polycarbonats) des unter Beispiel 1 a) beschriebenen Polybutylacrylats gelöst in 37 kg Methylenchlorid eingeleitet. Anschließend werden 28 ml (= 1 Mol-%, bezogen auf BPA) N-Ethyl-piperidin zugesetzt und 1 h lang nachgerührt. Die organische Phase wird abgetrennt, elektrolytfrei gewaschen und nach Abdestillieren des Methylenchlorids bei 280 °C extrudiert. Es wurden 3,7 kg Produkt erhalten, mit einer rel. Lösungsviskosität $\eta_{rel}$ = 1,292. Das Molekulargewicht der Polycarbonat-co-butylacrylate beträgt $\overline{M}_n$ = 28.000 g/Mol, was einem Polykondensationsgrad des aromatischen Polycarbonatblocks von 54,7 entspricht. Der Anteil an konventionellen Bisphenol-A-Polycarbonat mit p-tert-Butylphenylendgruppen gemäß Komponente A) beträgt 90,5 Gew.-% (97,4 Mol-%).

Tabelle

| | Beispiele | | |
|---|---|---|---|
| | 4 | 5 | 6 (Vergleich) |
| Eigenschaften $a_k$ (kJ/m²) | | | |
| + 23° C | 719 | 749 | 802 |
| + 0° C | 658 | 743 | 348 |
| - 10° C | 387 | 388 | 226 |
| - 20° C | 239 | 247 | - |
| - 30° C | - | - | - |
| - 40° C | - | - | - |
| Benzinbeständigkeit | | | |
| 1. Zyklus | | | |
| E = 0,3 % | 2 | 2 | 4 |
| E = 1,0 % | 2 | 2 | - |
| 2. Zyklus | | | |
| E = 0,3 % | 2 | 2 | - |
| E = 1,0 % | 2 | 2 | - |

## Patentansprüche

1. Verfahren zur Herstellung von monofunktionellen Polyacrylaten mit mittleren Zahlenmittelmolekulargewichten $\overline{M}_n$ von 3.000 bis 50.000 und mit einer Polydispersität D < 1,5 der Formel (I)

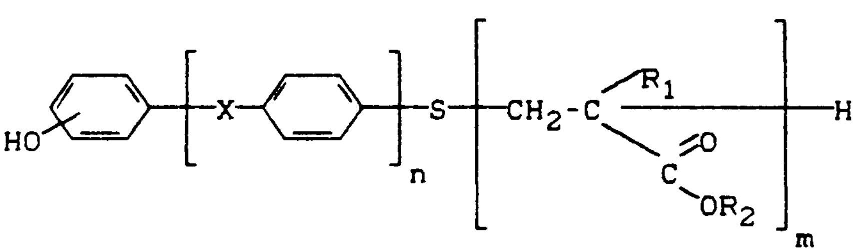

(I)

worin

X eine Einfachbindung, $C_1$-$C_8$-Alkylen, $C_2$-$C_{12}$-Alkyliden, Cyclohexyliden, -S-, -CO- oder -O-ist,

n Null oder 1 ist,

$R^1$ H, $CH_3$ oder CN ist,

$R^2$ $C_1$-$C_{12}$-Alkyl, $C_5$-$C_6$-Cycloalkyl, $C_7$-$C_{15}$-Aralkyl, $C_7$-$C_{15}$-Alkaryl, $C_6$-$C_{18}$-Aryl und $C_2$-$C_{12}$-w-Alkoxyalkyl, wobei die Alkylreste auch teilweise oder vollständig fluoriert sein können, und

m eine ganze Zahl von 30 bis 500,

dadurch gekennzeichnet, daß man Mercaptosilane der Formel (II)

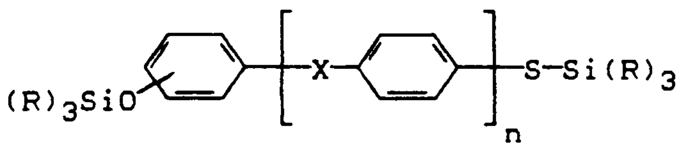

(II)

worin

X und n die für Formel (I) genannte Bedeutung haben und

R $C_1$-$C_{16}$-Alkyl, $C_5$-$C_6$-Cycloalkyl, $c_7$-$C_{15}$-Aralkyl, $C_7$-$C_{15}$-Alkaryl und $C_6$-$C_{18}$-Aryl

mit Verbindungen der Formel (III)

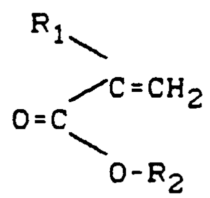

(III)

worin

$R_1$ und $R_2$ die für Formel (I) genannte Bedeutung haben,

in einer quasi-ionischen Polymerisation unter Verwendung von Katalysatoren bei Temperaturen von -50 bis 100 °C und bei einem molaren Verhältnis von (II) zu (III) wie 1 : 5 bis zu 1 : 1.000 und bei einem molaren Verhältnis von Katalysator zu Verbindung (II) von 1 : 500 bis 1 : 0,1 in aprotischen Lösungsmitteln umsetzt und nach beendeter Polymerisation mit Protonenspendern die "lebenden" Polymeren desaktiviert, danach die phenolische Siloxygruppe zum freien Phenol hydrolysiert und durch Verdampfen der Lösungsmittel die phenolterminierten Polyacrylate in bekannter Weise isoliert.

**2.** Verbindungen der Formel (I), mit mittleren Zahlenmolekulargewichten $\overline{M}_n$ von 3.000 bis 50.000 und mit einer Polydispersität D < 1,5,

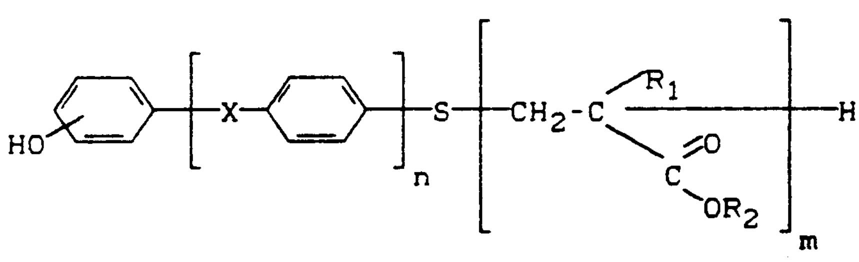

(I)

worin

X, n, m, $R_1$ und $R_2$ die in Anspruch 1 genannte Bedeutung haben.

**3.** Verwendung der Verbindungen der Formel (I) des Anspruchs 2, gegebenenfalls in Kombination mit üblichen anderen Kettenabbrechern zur Herstellung von aromatischen Polycarbonaten.

**4.** Verfahren zur Herstellung von aromatischen Polycarbonaten beziehungsweise Polycarbonatgemischen nach dem bekannten Verfahren der Phasengrenzflächenpolykondensation aus Diphenolen, Phosgen und Kettenabbrechern in einem Gemisch aus wäßrig-alkalischer Phase und organischer Phase unter Mitverwendung von Katalysatoren, dadurch gekennzeichnet, daß als Kettenabbrecher solche der Formel (I) gemäß Anspruch 1 oder 2 in Mengen von 0,1 Mol-% bis 10 Mol-%, bezogen auf Mole Diphenole eingesetzt werden, wobei jeweils maximal 99 Mol-% der Molmengen an einzusetzenden Kettenabbrechern (I) durch übliche andere Kettenabbrecher ersetzt sein können.

**5.** Polycarbonate beziehungsweise Polycarbonatgemische, erhältlich nach dem Verfahren des Anspruchs 4.

**6.** Polycarbonate beziehungsweise Polycarbonatgemische der Formel (VI)

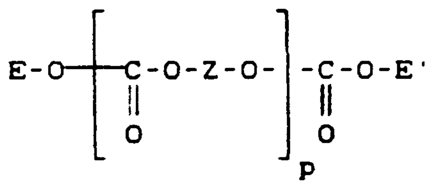

(VI) ,

worin

-Z- ein aromatischer Rest mit 6 bis 30 C-Atomen ist, der einen oder mehrere aromatische Kerne enthalten kann, substituiert sein kann und aliphatische Reste, cycloaliphatische Reste, araliphatische Reste, -S-, $-SO_2-$, -CO- oder -O- als Brückenglieder enthalten kann,

p eine ganze Zahl zwischen 10 und 1.000 ist, E-O- den Rest (Ia)

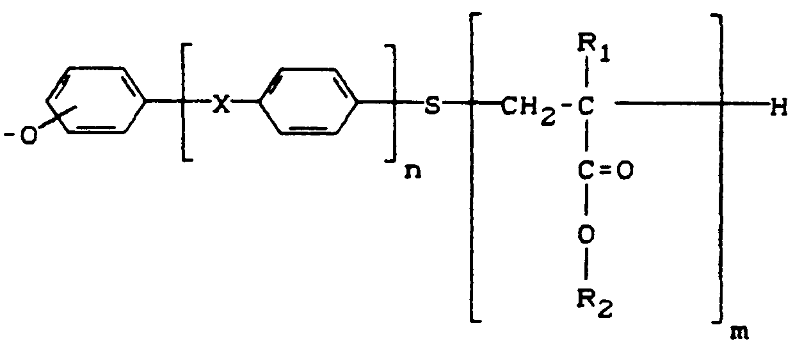

(Ia) ,

worin X, n, m, $R_1$ und $R_2$ die für Formel (I) des Anspruchs 2 genannte Bedeutung haben, darstellt, und worin

E'-O- entweder E-O- oder der Rest eines üblichen, anderen Kettenabbrechers ist.

**7.** Verwendung der Polycarbonate beziehungsweise Polycarbonatgemische des Anspruchs 6 [Komponente B)] in Mengen von 0,5 Gew.-% bis 30 Gew.-%, bezogen auf Gesamtgewicht an Komponente B) und anderem thermoplastischen, aromatischen Polycarbonat [Komponente A)], zur Verbesserung der Benzinbeständigkeit von anderen thermoplastischen, aromatischen Polycarbonaten [Komponente A)].

**8.** Polycarbonatformmassen, enthaltend von 0,5 Gew.-% bis 30 Gew.-%, bezogen auf Gesamtgewicht an Polycarbonatformmasse, an Polycarbonat beziehungsweise Polycarbonatgemisch [Komponente B)] des Anspruchs 6 und von 99,5 Gew.-% bis 70 Gew.-% an anderen thermoplastischen Polycarbonaten [Komponente A)], wobei die Summe der Komponenten A) + B) jeweils 100 Gew.-% ist.

**9.** Verfahren zur Herstellung der Polycarbonatformmassen des Anspruchs 8, dadurch gekennzeichnet, daß man entweder die Komponente A) mit B) oberhalb der Erweichungstemperatur der Komponente A)

vermischt und anschließend dieses Gemisch in bekannter Weise isoliert oder Lösungen der Komponente A) mit Lösungen der Komponente B) vermischt und anschließend die Mischung durch gemeinsames Ausdampfen der Lösungsmittel in bekannter Weise isoliert.

## Claims

**1.** A process for the production of monofunctional polyacrylates which have average number average molecular weights $\overline{M}_n$ in the range from 3,000 to 50,000 and a polydispersity D of <1.5 and which correspond to formula (I)

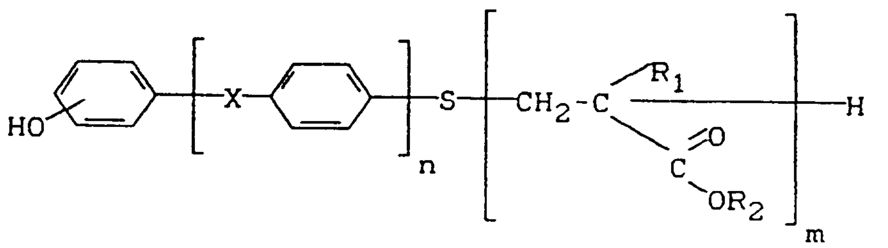

(I)

in which

- X is a single bond, $C_{1-8}$ alkylene, $C_{2-12}$ alkylidene, cyclohexylidene, -S-, -CO- or -O-,
- n is 0 or 1,
- $R^1$ is H, $CH_3$ or CN,
- $R^2$ is $C_{1-12}$ alkyl, $C_{5-6}$ cycloalkyl, $C_{7-15}$ aralkyl, $C_{7-15}$ alkaryl, $C_{6-18}$ aryl and $C_{2-12}$-w-alkoxyalkyl; the alkyl groups may also be completely or partly fluorinated, and
- m is an integer of from 30 to 500,

characterized in that mercaptosilanes corresponding to formula (II)

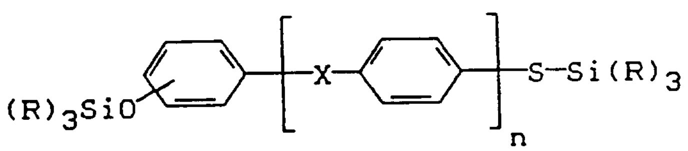

(II)

in which

- X and n are as defined for formula (I) and
- R is $C_{1-16}$ alkyl $C_{5-6}$ cycloalkyl, $C_{7-15}$ aralkyl, $C_{7-15}$ alkaryl and $C_{6-18}$ aryl,

are reacted with compounds corresponding to formula (III)

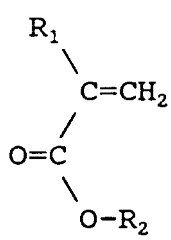

(III)

in which

$R_1$ and $R_2$ are as defined for formula (I),

in a quasi-ionic polymerization in the presence of catalysts at temperatures in the range from -50 to 100 °C with a molar ratio of (II) to (III) of from 1:5 to 1:1,000 and with a molar ratio of catalyst to compound (II) of from 1:500 to 1:0.1, the reaction being carried out in aprotic solvents, and on completion of polymerization the "living" polymers are deactivated with proton donors, the phenolic

siloxy group is hydrolyzed to the free phenol, and the phenol-terminated polyacrylates are isolated in known manner by evaporation of the solvents.

**2.** Compounds which have average number average molecular weights $\overline{M}_n$ in the range from 3,000 to 50,000 and a polydispersity D of <1.5 and which correspond to formula (I)

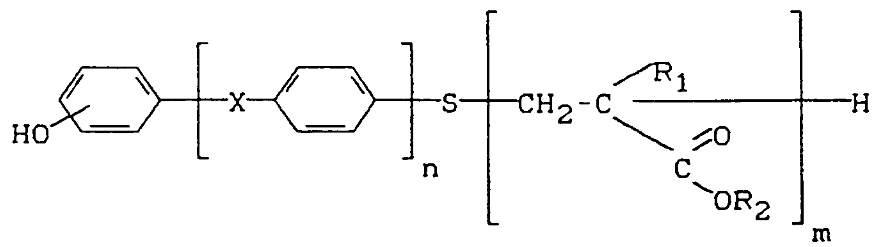

(I)

in which
X, n, m, $R_1$ and $R_2$ are as defined in claim 1.

**3.** The use of the compounds corresponding to formula (I) claimed in claim 2, optionally in combination with typical other chain terminators, for the production of aromatic polycarbonates.

**4.** A process for the production of aromatic polycarbonates or polycarbonate mixtures by the known interfacial polycondensation method from diphenols, phosgene and chain terminators in a mixture of aqueous-alkaline phase and organic phase in the presence of catalysts, characterized in that the chain terminators of formula (I) according to claim 1 are used as the chain terminators in quantities of from 0.1 mol-% to 10 mol-%, based on mols diphenols, at most 99 mol-% of the molar quantities of chain terminators (I) to be used being replaceable by typical other chain terminators.

**5.** Polycarbonates or polycarbonate mixtures obtainable by the process claimed in claim 4.

**6.** Polycarbonates or polycarbonate mixtures corresponding to formula (VI)

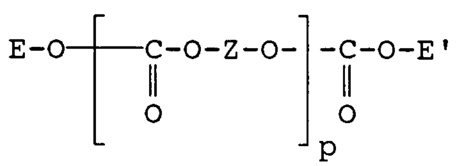

(VI)

in which

-Z- is an aromatic $C_{6-30}$ radical which may contain one or more aromatic nuclei, may be substituted and may contain aliphatic radicals, cycloaliphatic radicals, araliphatic radicals, -S, $-SO_2-$, -CO- or -O- as bridge members,

p is an integer of 10 to 1,000,

E-O- represents the residue (Ia)

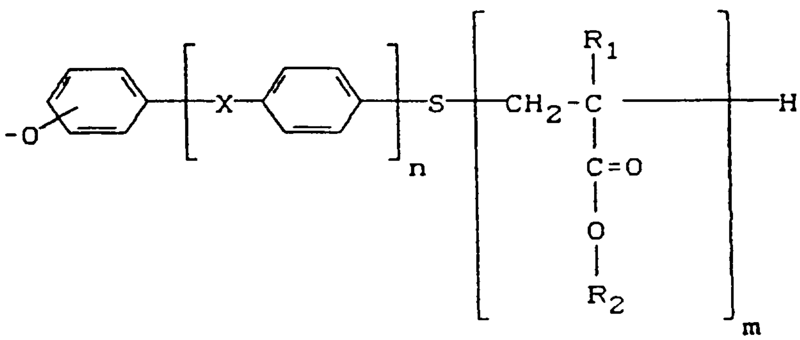 (Ia) ,

where X, n, m, $R_1$ and $R_2$ are as defined for formula (I) in claim 2,

and

E'-O- is either E-O- or the residue of a typical other chain terminator.

**7.** The use of the polycarbonates or polycarbonate mixtures claimed in claim 6 [component B)] in quantities of 0.5% by weight to 30% by weight, based on the total weight of component B) and other thermoplastic, aromatic polycarbonate [component A)], for improving the gasoline resistance of other thermoplastic aromatic polycarbonates [component A)].

**8.** Polycarbonate molding compounds containing 0.5% by weight to 30% by weight, based on the total weight of the polycarbonate molding compound, of the polycarbonate or polycarbonate mixture [component B)] claimed in claim 6 and 99.5% by weight to 70% by weight of other thermoplastic polycarbonates [component A)], the sum of components A) + B) being 100% by weight.

**9.** A process for the production of the polycarbonate molding compounds claimed in claim 8, characterized in that either components A) and B) are mixed at temperatures above the softening temperature of component A) and the resulting mixture is subsequently isolated in known manner or solutions of component A) are mixed with solutions of component B) and the resulting mixture is subsequently isolated in known manner by evaporation of the solvents.

**Revendications**

**1.** Procédé pour la préparation de polyacrylates monofonctionnels ayant un poids moléculaire moyen en nombre $\overline{M}_n$ compris entre 3 000 et 50 000 et ayant une polydispersité $D < 1,5$ de formule (I)

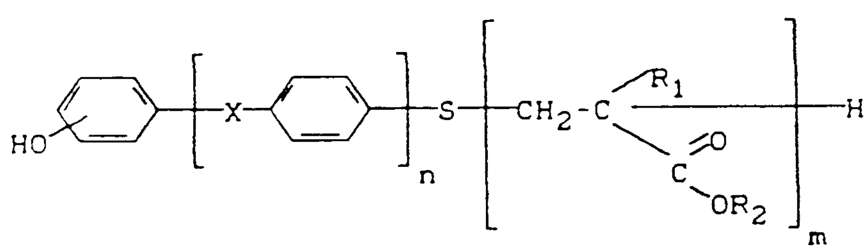 (I)

où

X est une liaison simple, un groupe alkylène en $C_1$-$C_8$, un groupe alkylidène en $C_2$-$C_{12}$, un cyclohexylidène, -S-, -CO- ou -O-,

n est égal à 0 ou 1,

$R^1$ est H, $CH_3$ ou CN,

$R^2$ est un groupe alkyle en $C_1$-$C_{12}$, cycloalkyle en $C_5$-$C_6$, aralkyle en $C_7$-$C_{15}$, alkaryle en $C_7$-$C_{15}$, aryle en $C_6$-$C_{18}$ ou $\omega$-alcoxyalkyle en $C_2$-$C_{12}$, où les restes alkyles peuvent être partiellement ou totalement fluorés, et

m un nombre entier compris entre 30 et 500,

caractérisé en ce qu'on fait réagir des mercaptosilanes de formule (II)

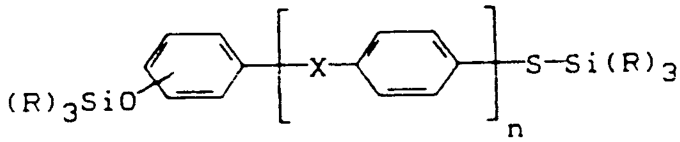

(II)

où

X et n ont la signification citée pour la formule (I) et

R est un groupe alkyle en $C_1$-$C_{16}$, cycloalkyle en $C_5$-$C_6$, aralkyle en $C_7$-$C_{15}$, alkaryle en $C_7$-$C_{15}$ ou aryle en $C_6$-$C_{18}$

avec des composés de formule (III)

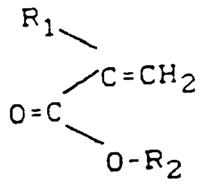

(III)

où

$R_1$ et $R_2$ ont la signification citée pour la formule (I),

au cours d'une polymérisation quasi-ionique, en présence de catalyseurs, à des températures comprises entre -50 et 100 °C, et à un rapport molaire de (II) à (III) compris entre 1 : 5 et 1 : 1 000, et à un rapport molaire du catalyseur au composé (II) compris entre 1 : 500 et 1 : 0,1, dans un solvant aprotique, et en ce que lorsque la polymérisation est terminée, les polymères "actifs" sont désactivés par des donneurs de protons, puis en ce que le groupe siloxy phénolique est hydrolysé en phénol libre et en ce que les polyacrylates à terminaison phénol sont isolés de manière connue par évaporation du solvant.

**2.** Composés de formule (I) ayant un poids moléculaire moyen en nombre $\overline{M}_n$ compris entre 3 000 et 50 000 et ayant une polydispersité D < 1,5

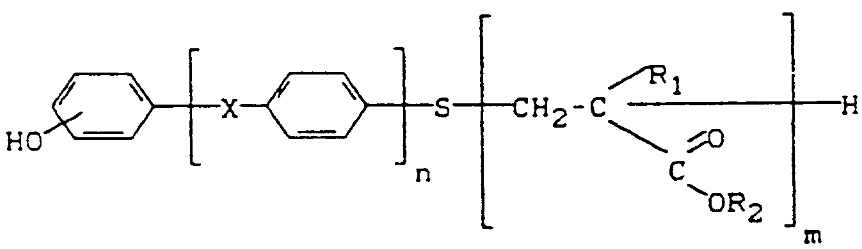

(I)

où

X, n, m, $R_1$ et $R_2$ ont la signification citée dans la revendication 1.

**3.** Utilisation des composés de formule (I) selon la revendication 2, éventuellement en combinaison avec d'autres agents de rupture de chaîne classiques, pour la préparation de polycarbonates aromatiques.

**4.** Procédé pour la préparation de polycarbonates respectivement de mélanges de polycarbonates aromatiques, selon le procédé connu de polycondensation interfaciale, à partir de diphénols, de phosgène et d'agents de rupture de chaîne, dans un mélange constitué par une phase alcaline aqueuse et une phase organique, en présence de catalyseurs, caractérisé en ce qu'on ajoute en tant qu'agent de rupture de chaîne ceux de formule (I), selon la revendication 1 ou 2, en quantité comprise entre 0,1 % en mole et 10% en mole, rapportée aux moles de diphénols, où à chaque fois au maximum, 99% en mole des quantités molaires des agents de rupture de chaîne (I) à ajouter, peuvent

être remplacés par d'autres agents de rupture de chaîne classiques.

**5.** Polycarbonates, respectivement mélanges de polycarbonates obtenus d'après le procédé de la revendication 4.

**6.** Polycarbonates, respectivement mélanges de polycarbonates de formule (VI)

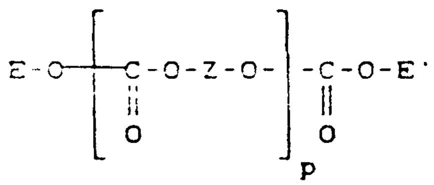

(VI) ,

où

-Z- est un reste aromatique en $C_6$-$C_{30}$, qui peut contenir un ou plusieurs noyaux aromatiques, qui peut être substitué et qui peut contenir, comme chaînons de liaison, des restes aliphatiques, des restes cycloaliphatiques, des restes araliphatiques, -S-, -$SO_2$-, -CO- ou -O-,

p est un nombre entier compris entre 10 et 1 000, E-O- représente le reste de formule (Ia)

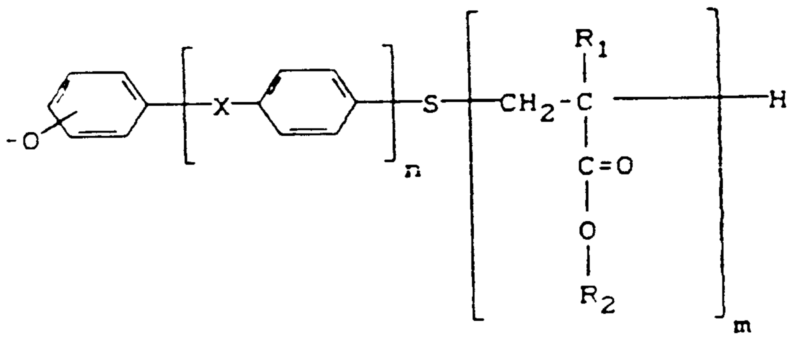

(Ia) ,

où X, n, m, $R_1$ et $R_2$ ont les significations citées pour la formule (I) de la revendication 2 et où E'-O- est soit E-O-, soit le reste d'un autre agent de rupture de chaîne classique.

**7.** Utilisation des polycarbonates, respectivement des mélanges de polycarbonates selon la revendication 6 [constituant B)], en quantités comprises entre 0,5% en poids et 30 % en poids, rapportée au poids total de constituant B), et d'un autre polycarbonate aromatique thermoplastique [constituant A)], pour l'amélioration de la résistance à l'essence des autres polycarbonates aromatiques thermoplastiques [constituant A)].

**8.** Matières à mouler en polycarbonate, contenant une quantité comprise entre 0,5% en poids et 30% en poids, rapportée au poids total de matière à mouler en polycarbonate, de polycarbonate respectivement de mélange de polycarbonates [constituant B)] selon la revendication 6 et une quantité comprise entre 99,5% en poids et 70% en poids, d'autres polycarbonates thermoplastiques [constituant A)], où la somme des constituants A) + B) est à chaque fois égale à 100% en poids.

**9.** Procédé pour la préparation des matières à mouler en polycarbonate selon la revendication 8, caractérisé en ce que l'on mélange soit le constituant A) avec B) au-dessus de la température de ramollissement du constituant A) puis que l'on isole ce mélange de façon connue, soit que l'on mélange des solutions du constituant A) avec des solutions du constituant B) et que l'on isole finalement le mélange à l'aide d'une évaporation commune du solvant, de façon connue.